# EUROPEAN PATENT APPLICATION

(11) **EP 4 800 083 A1**
(43) Date of publication of application: **02.09.2026**
(21) Application number: 24944958.8
(22) Date of filing: 04.12.2024
(51) Int. Cl.: C09J 133/12, C08J 3/12, C08L 29/04, H01M 50/449

(54) **HIGH-LOW TEMPERATURE BONDING SLURRY, PREPARATION METHOD FOR LITHIUM BATTERY SEPARATOR, AND LITHIUM BATTERY**

(30) Priority: 26.09.2024 CN 202411353129
(71) Applicant: Hebei Gellec New Energy Science & Technology Co., Ltd, Handan, Hebei 057150 (CN)
(72) Inventor: XING, Peng, Handan, Hebei 057150 (CN); SU, Bihai, Handan, Hebei 057150 (CN); YUAN, Haichao, Handan, Hebei 057150 (CN); XU, Feng, Handan, Hebei 057150 (CN); ZHAO, Yuanxiang, Handan, Hebei 057150 (CN); QIAO, Xue, Handan, Hebei 057150 (CN); HU, Shilei, Handan, Hebei 057150 (CN); JIANG, Xuyang, Handan, Hebei 057150 (CN); LI, Shaodong, Handan, Hebei 057150 (CN); YANG, Zhentu, Handan, Hebei 057150 (CN)
(74) Representative: Viering, Jentschura & Partner mbB Patent- und Rechtsanwälte
(86) International application number: PCT/CN2024/136727
(87) International publication number: WO 2026/065752

(57) **Abstract**

The present disclosure relates to the technical field of lithium batteries, and proposes a high-low-temperature adhesive slurry, a preparation method of a lithium battery separator, and a lithium battery. The high-low-temperature adhesive slurry includes the following components in parts by mass: 10-15 parts of adhesive material, 5-15 parts of thickener, 2-15 parts of binder, 0-0.5 parts of dispersant, and 50-80 parts of water, wherein the adhesive material is a high-temperature adhesive material coated with a low-temperature adhesive material, and the raw materials of the adhesive material comprise a low-temperature adhesive material and a high-temperature adhesive material at a mass ratio of 1:9-9:1. Through the above technical solution, the invention addresses the problem in the related art where the water-based adhesive materials used in lithium batteries exhibit poor adhesion force to the electrode sheets and require high-temperature softening to achieve satisfactory adhesion performance.

## Description

### TECHNICAL FIELD

The present disclosure relates to the technical field of lithium batteries, and more specifically, to a high-low-temperature adhesive slurry, a preparation method of a lithium battery separator, and a lithium battery.

### BACKGROUND

As the demand for battery energy density increases, the addition amount of emerging materials such as high-nickel and silicon-carbon materials is growing. While these materials provide high capacity, they have significant cyclic contraction and expansion during the charge and discharge process, causing the electrode group system composed of electrode-separator-electrode to twist and deform during creeping and even form gaps. In minor cases, it affects the shape of the battery and causes the battery swelling; in severe cases, it causes lithium deposition on the surface of the negative electrode, causing safety hazards such as internal short circuit, self-discharge, spontaneous combustion, and explosion.

In order to solve the above problems, the commonly used method is to modify the surface to impart adhesion, forming an adhesive layer between the electrode-separator-electrode system and solidifying the interface; commonly used adhesive materials include polyvinylidene fluoride-hexafluoropropylene copolymer (PVDF-HFP copolymer), polymethyl methacrylate (PMMA), polyacrylonitrile (PAN), etc.; the process routes used comprise the following two kinds: oil-based route (the polymer is dissolved in an organic solvent, and the obtained solution is coated to modify surface of the polyolefin-based separator) and water-based route (the polymer is dispersed in water to form a suspension of the polymer, and the suspension is coated to modify surface of the polyolefin-based separator).

The oil-based route provides better adhesion between the separator and electrodes, but the cost of solvents and environmental control is high. The most commonly used water-based route employs PVDF-HFP copolymer, with water as the dispersion medium, producing no waste gas or waste liquid, offering low cost and good environmental affinity. However, its adhesion to electrode sheets is weak, requiring softening at high temperatures to achieve better adhesion performance.

### SUMMARY

The present disclosure provides a high-low-temperature adhesive slurry, a preparation method of a lithium battery separator, and a lithium battery, solving the problems in the related art where the water-based adhesive materials used in lithium batteries exhibit poor adhesion to the electrode sheets and require softening at high temperatures for good adhesion performance.

The technical solution of the present disclosure is as follows:
A high-low-temperature adhesive slurry comprises the following components in parts by mass: 10-15 parts of adhesive material, 5-15 parts of thickener, 2-15 parts of binder, 0-0.5 parts of dispersant, and 50-80 parts of water, wherein the adhesive material is a high-temperature adhesive material coated with a low-temperature adhesive material, and the raw materials of the adhesive material include a low-temperature adhesive material and a high-temperature adhesive material at a mass ratio of 1:9-9:1.

As a further technical solution, the thickener includes one or two of sodium carboxymethyl cellulose and polyacrylamide.

As a further technical solution, the binder includes one or two of polyvinyl alcohol and acrylic acid.

As a further technical solution, the dispersant includes one or more selected from quaternary ammonium salt dispersants, acrylate-based polymer dispersants, and polyester-based polymer dispersants.

As a further technical solution, the mass of the low-temperature adhesive material ≤ the mass of the high-temperature adhesive material.

The present disclosure defines that the mass of the low-temperature adhesive material ≤ the mass of the high-temperature adhesive material, which further improves the high-low-temperature adhesion of the adhesive slurry to the electrode sheets.

As a further technical solution, the mass ratio of the low-temperature adhesive material to the high-temperature adhesive material is 1:2-4.

The present disclosure defines that the mass ratio of the low-temperature adhesive material to the high-temperature adhesive material is 1:2-4, which further improves the high-low-temperature adhesion of the adhesive slurry to the electrode sheets.

As a further technical solution, the low-temperature adhesive material is a polyacrylate polymer, and the high-temperature adhesive material is a fluorine-containing polymer.

As a further technical solution, the polyacrylate polymer is polymethyl methacrylate, and the fluorine-containing polymer can be any polymer containing fluorine atoms, for example, it can be one or more selected from polytetrafluoroethylene, polyvinylidene fluoride, and polyvinylidene fluoride-hexafluoropropylene copolymer, preferably polyvinylidene fluoride-hexafluoropropylene copolymer.

As a further technical solution, the preparation method of the adhesive material includes the following steps: mixing the low-temperature adhesive material and the high-temperature adhesive material uniformly, melt-extruding, and granulating to obtain the adhesive material.

As a further technical solution, the adhesive material is ethylene-vinyl alcohol copolymer modified adhesive material.

In the present disclosure, after the adhesive material is modified by the ethylene-vinyl alcohol copolymer, the high-low-temperature adhesion of the adhesive slurry to the electrode sheets is further improved.

As a further technical solution, the raw materials of the ethylene-vinyl alcohol copolymer modified adhesive material include ethylene-vinyl alcohol copolymer and adhesive material at a mass ratio of 1-5:15.

As a further technical solution, the raw materials of the ethylene-vinyl alcohol copolymer modified adhesive material include ethylene-vinyl alcohol copolymer and adhesive material at a mass ratio of 1:5.

The present disclosure defines that the raw materials of the ethylene-vinyl alcohol copolymer modified adhesive material include ethylene-vinyl alcohol copolymer and adhesive material at a mass ratio of 1:5, which further improves the high-low-temperature adhesion of the adhesive slurry to the electrode sheets.

As a further technical solution, the preparation method of the ethylene-vinyl alcohol copolymer modified adhesive material includes the following steps: dissolving the ethylene-vinyl alcohol copolymer in a solvent, adding the adhesive material and mixing uniformly, and drying to obtain the ethylene-vinyl alcohol copolymer modified adhesive material.

As a further technical solution, the solvent can be any solvent that dissolves the ethylene-vinyl alcohol copolymer, preferably a mixed solvent of water and n-propanol.

The present disclosure also proposes a preparation method of a lithium battery separator, comprising the following steps: coating the high-low-temperature adhesive slurry onto a surface of a polyolefin base film, and drying to obtain the lithium battery separator.

As a further technical solution, the coating includes one of full-coating, point-coating, intermittent-coating, and stripe-coating.

As a further technical solution, the full-coating adopts gravure-coating.

As a further technical solution, the point-coating adopts spray-coating to form random points or adopts point-coating equipment to form uniformly distributed points like a matrix.

The present disclosure also proposes a lithium battery, the raw materials of which include the lithium battery separator.

The working principle and beneficial effects of the present disclosure are as follows:

The present disclosure provides a high-low-temperature adhesive slurry with good adhesion to the electrode sheets, including an adhesive material, a thickener, a binder, a dispersant and water, wherein the adhesive material is a high-temperature adhesive material coated with a low-temperature adhesive material, the adhesive material not only has roomtemperature adhesive performance but also has strong high-temperature adhesive performance, and its adhesive temperature range covers most of the scenarios of lithium batteries from battery cell preparation to subsequent use, so that the separator and the electrode sheets have sufficient adhesive performance, and can ensure the stable performance of the battery cell throughout its life cycle.

### BRIEF DESCRIPTION OF THE DRAWINGS

The present disclosure is further described in details below in conjunction with the accompanying drawings and specific embodiments.
FIG. 1 is an SEM image of a lithium battery separator magnified 15.00K times, wherein the lithium battery separator has a point-coated adhesive coating prepared using the high-low-temperature adhesive slurry obtained in Example 1 of the present disclosure;

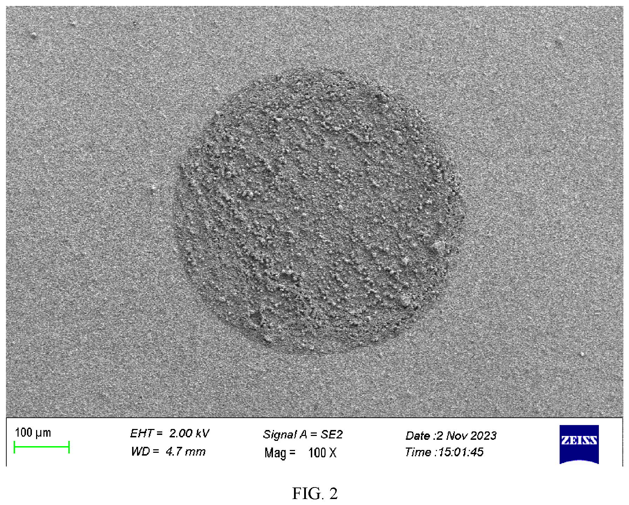

FIG. 2 is an SEM image of a lithium battery separator magnified 100 times, wherein the lithium battery separator has a point-coated adhesive coating prepared using the high-low-temperature adhesive slurry obtained in Example 1 of the present disclosure; and
FIG. 3 is an SEM image of a lithium battery separator magnified 15.00K times, wherein the lithium battery separator has a spot-coated adhesive coating prepared using the high-low-temperature adhesive slurry obtained in Comparative Example 1 of the present disclosure.

### DETAILED DESCRIPTION OF THE EMBODIMENTS

The followings will be combined with the embodiments of the present disclosure to clearly and completely describe the technical solutions in the embodiments of the present disclosure. Obviously, the described embodiments are only part of the embodiments of the present disclosure, not all of the embodiments. Based on the embodiments of the present disclosure, all other embodiments obtained by ordinary technicians in this field without creative work are within the scope of protection of the present disclosure.

The parameters of the raw materials in the following embodiments and comparative examples are as follows:
polymethyl methacrylate is PMMA CM-211;
the brand of polyvinylidene fluoride-hexafluoropropylene copolymer is Sigma, its average Mw is 400,000, and its average Mn is 130,000;
ethylene-vinyl alcohol copolymer is purchased from Shanghai Zhenzhun Biotechnology Co., Ltd., product number: 55207345;
polyvinyl alcohol is PVA 2488; and
polyacrylamide is cationic polyacrylamide with a weight-average molecular weight of 18 million.

### Example 1

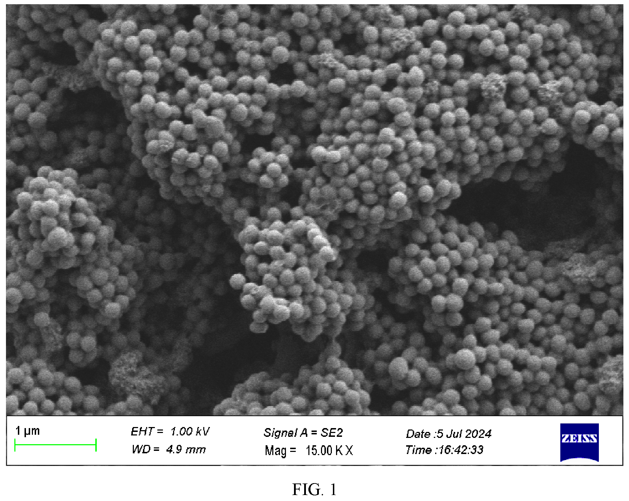

S1, mixing 13.5 parts of polymethyl methacrylate and 1.5 parts of polyvinylidene fluoride-hexafluoropropylene copolymer uniformly, melt-extruding, and granulating to obtain an adhesive material; and
S2, mixing 69.9 parts of water and 0.1 part of octadecyl dimethyl benzyl ammonium chloride quaternary ammonium salt and stirring for 10 min, adding 15 parts of adhesive material and continuing stirring for 90 min, adding 5 parts of sodium carboxymethyl cellulose and continuing stirring for 10 min, and finally adding 10 parts of polyvinyl alcohol and stirring for 30 min to obtain a high-low-temperature adhesive slurry (SEM image is shown in FIG. 1).

### Example 2

S1, mixing 13.5 parts of polymethyl methacrylate and 1.5 parts of polyvinylidene fluoride-hexafluoropropylene copolymer uniformly, melt-extruding, and granulating to obtain an adhesive material; and
S2, mixing 50 parts of water and 0.5 part of EFKA-4560 high-molecular weight polyacrylate dispersant and stirring for 5 min, then adding 10 parts of adhesive material and continuing stirring for 10 min, adding 10 parts of polyacrylamide and continuing stirring for 5 min, and finally adding 2 parts of acrylic acid and stirring for 5 min to obtain a high-low-temperature adhesive slurry.

### Example 3

S1, mixing 13.5 parts of polymethyl methacrylate and 1.5 parts of polyvinylidene fluoride-hexafluoropropylene copolymer uniformly, melt-extruding, and granulating to obtain an adhesive material; and
S2, mixing and stirring 80 parts of water and 13 parts of adhesive material for 120 min, adding 15 parts of polyacrylamide and continuing stirring for 20 min, and finally adding 15 parts of acrylic acid and stirring for 30 min to obtain a high-low-temperature adhesive slurry.

### Example4

The difference from Embodiment 1 is only that: S1, mixing 7.5 parts of polymethyl methacrylate and 7.5 parts of polyvinylidene fluoride-hexafluoropropylene copolymer uniformly, melt-extruding, and granulating to obtain an adhesive material.

### Example5

The difference from Example 1 is only that: S1, mixing 5 parts of polymethyl methacrylate and 10 parts of polyvinylidene fluoride-hexafluoropropylene copolymer uniformly, melt-extruding, and granulating to obtain an adhesive material.

### Example 6

The difference from Example 1 is only that: S1, mixing 3 parts of polymethyl methacrylate and 12 parts of polyvinylidene fluoride-hexafluoropropylene copolymer uniformly, melt-extruding, and granulating to obtain an adhesive material.

### Example 7

The difference from Example 1 is only that: S1, mixing 1.5 parts of polymethyl methacrylate and 13.5 parts of polyvinylidene fluoride-hexafluoropropylene copolymer uniformly, melt-extruding, and granulating to obtain an adhesive material.

### Example 8

S1, mixing 3 parts of polymethyl methacrylate and 12 parts of polyvinylidene fluoride-hexafluoropropylene copolymer uniformly, melt-extruding, and granulating to obtain an adhesive material;
S2, dissolving 1 g of ethylene-vinyl alcohol copolymer in 100 mL of a mixed solvent of water and n-propanol at a volume ratio of 1:1, adding 15 g of adhesive material and stirring at 500 rpm for 20 min to mixing uniformly, filtering, and drying to obtain ethylene-vinyl alcohol copolymer modified adhesive material; and
S3, mixing 69.9 parts of water and 0.1 part of octadecyl dimethyl benzyl ammonium chloride quaternary ammonium salt and stirring for 10 min, adding 15 parts of ethylene-vinyl alcohol copolymer modified adhesive material and continuing stirring for 90 min, adding 5 parts of sodium carboxymethyl cellulose and continuing stirring for 10 min, and finally adding 10 parts of polyvinyl alcohol and stirring for 30 min to obtain a high-low-temperature adhesive slurry.

### Example 9

The difference from Example 8 is only that: 3 g of ethylene-vinyl alcohol copolymer.

### Example 10

The difference from Example 8 is only that: 5 g of ethylene-vinyl alcohol copolymer.

### Comparative Example 1

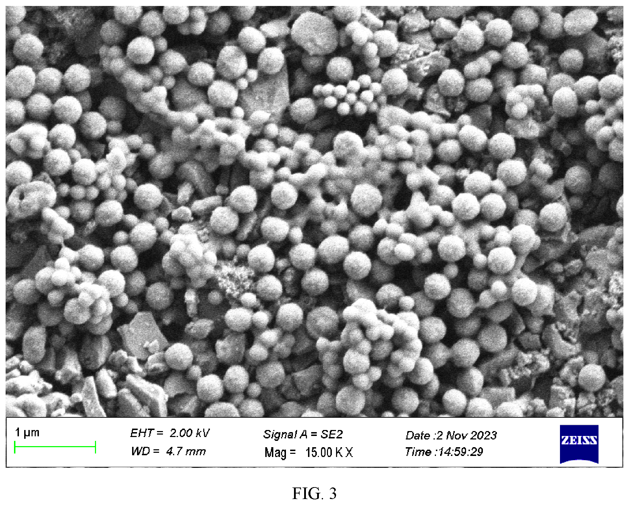

Mixing 69.9 parts of water and 0.1 part of octadecyl dimethyl benzyl ammonium chloride quaternary ammonium salt and stirring for 10 min, adding 13.5 parts of polymethyl methacrylate and 1.5 parts of polyvinylidene fluoride-hexafluoropropylene copolymer and continuing stirring for 90 min, adding 5 parts of sodium carboxymethyl cellulose and continuing stirring for 10 min, and finally adding 10 parts of polyvinyl alcohol and stirring for 30 min to obtain a high-low-temperature adhesive slurry (SEM image is shown in FIG. 3).

### Preparation of Lithium Battery Separator:

(1) point-coating the high-low-temperature adhesive slurry obtained in Example 1 onto the surface of a polyolefin base film at a speed of 130 m/min, wherein the thickness of the polyolefin base film is 5 µm, and drying the moisture on the surface of the coating in an 80 °C oven to obtain a point-coated adhesive coating lithium battery separator with a coating thickness of 3.5 µm and a coverage rate of 15%. The SEM images are shown in FIG.s 1-2.
(2) roller-coating the high-low-temperature adhesive slurry obtained in Example 1 onto the surface of a polyolefin base film at a speed of 100 m/min, wherein the thickness of the polyolefin base film is 5 µm, and drying the moisture on surface of the coating in an 80 °C oven to obtain a fully roll-coated adhesive coating lithium battery separator with a coating thickness of 1.5 µm.
(3) spray-coating the high-low-temperature adhesive slurry obtained in Example 1 onto the surface of a polyolefin base film at a speed of 130 m/min, wherein the thickness of the polyolefin base film was 5 µm, and drying the moisture on surface of the coating in an 80 °C oven to obtain a sprayed adhesive coating lithium battery separator with a coating thickness of 3.5 µm and a coverage rate of 28%.
(4) point-coating the high-low-temperature adhesive slurry obtained in Comparative Example 1 onto the surface of a polyolefin base film at a speed of 130 m/min, wherein the thickness of the polyolefin base film was 5 µm, and drying the moisture on surface of the coating in an 80 °C oven to obtain a point-coated adhesive coating lithium battery separator with a coating thickness of 3.5 µm and a coverage rate of 15%. The SEM image is shown in FIG. 3.

### Performance Test:

The high-low-temperature adhesive slurry obtained in Examples 1-10 and Comparative Example 1 were subjected to an adhesion force test. The test method is as follows: referring to the preparation method of a lithium battery separator (1), the high-low-temperature adhesive slurry obtained in Examples 1-10 and Comparative Example 1 were respectively prepared into point-coated adhesive coating lithium battery separators and point-coated adhesive coating electrode sheets. Samples of 100 mm×30 mm were cut, placed under a hot press with the coating side of the separator corresponding to the coating side of the electrode sheet, and hot-pressed at 80 °C under 0.3 MPa for 1 s. Then, an electronic tensile tester was used to test the adhesion force between the separator coating and the electrode sheet coating. The results were shown in Table 1.

**Table 1 Adhesion force between separator coating and coating of electrode sheet**

| Items | 30 °C Adhesion force (N/m) | 50 °C Adhesion force (N/m) | 70 °C Adhesion force (N/m) | 90 °C Adhesion force (N/m) |
|---|---|---|---|---|
| Example 1 | 1.5 | 2.6 | 3.3 | 4.5 |
| Example 2 | 1.4 | 2.2 | 2.9 | 3.8 |
| Example 3 | 1.2 | 2.1 | 2.7 | 3.3 |
| Example 4 | 1.7 | 2.7 | 3.6 | 4.9 |
| Example 5 | 1.9 | 3.0 | 4.4 | 5.6 |
| Example 6 | 2.1 | 3.5 | 4.6 | 6.2 |
| Example 7 | 1.8 | 2.8 | 4.0 | 5.3 |
| Example 8 | 2.5 | 3.9 | 5.1 | 6.8 |
| Example 9 | 3.1 | 4.6 | 5.9 | 7.3 |
| Example 10 | 2.7 | 4.3 | 5.5 | 7.1 |
| Comparative Example 1 | 1.1 | 1.8 | 2.4 | 3.1 |

It could be seen from Table 1 that the adhesion force of the adhesive slurry provided by the enclosure is above 1.2 N/m at 30 °C, above 2.1 N/m at 50 °C, above 2.7 N/m at 70 °C, and above 3.3 N/m at 90 °C, and the adhesive slurry has good high-low-temperature adhesion force with the electrode sheets.

Compared with Comparative Example 1, in Example 1, the adhesion force of the adhesive slurry obtained by adding a low-temperature adhesive material coated with the high-temperature adhesive material is better than that of Comparative Example 1 at 30 °C, 50 °C, 70 °C and 90 °C, indicating that the low-temperature adhesive material coated with high-temperature adhesive material as the adhesive material can improve the high-low-temperature adhesion force of the adhesive slurry with the electrode sheets.

The adhesion force of the adhesive slurry obtained in Examples 4-7 at 30 °C, 50 °C, 70 °C and 90 °C was better than that of Example 1 , indicating that the quality of the low-temperature adhesive material is not better than the quality of the high-temperature adhesive material, further improving the high-low-temperature adhesion of the adhesive slurry to the electrode sheets.

The adhesion force of the adhesive slurry obtained in Examples 5-6 at 30 °C, 50 °C, 70 °C and 90 °C is better than that of Examples 4 and 7, indicating that the mass ratio 1:2-4 of the low-temperature adhesive material to the high-temperature adhesive material can further improve the high-low-temperature adhesion of the adhesive slurry to the electrode sheets.

The adhesion force of the adhesive slurry obtained in Examples 8-10 at 30 °C, 50 °C, 70 °C and 90 °C is better than that of Example 6, indicating that the high-low-temperature adhesion force between adhesive slurry and electrode sheets is further improved after the adhesive material is modified by ethylene-vinyl alcohol copolymer.

The adhesion force of the adhesive slurry obtained in Example 9 at 30 °C, 50 °C, 70 °C and 90 °C is better than that of Example 8 and Example 10, indicating that the mass ratio 1:5 of ethylene-vinyl alcohol copolymer to adhesive material further improves the high-low-temperature adhesion of the adhesive slurry to the electrode sheets.

The above are only preferred embodiments of the present disclosure and are not intended to limit the present disclosure. Any modifications, equivalent substitutions, improvements, etc. made within the spirit and principles of the present disclosure should be included in the protection scope of the present disclosure.

## Claims

1. A high-low-temperature adhesive slurry, comprising the following components in parts by mass: 10-15 parts of adhesive material, 5-15 parts of thickener, 2-15 parts of binder, 0-0.5 parts of dispersant, and 50-80 parts of water, wherein the adhesive material is a high-temperature adhesive material coated with a low-temperature adhesive material, and the raw materials of the adhesive material include the low-temperature adhesive material and the high-temperature adhesive material at a mass ratio of 1:9-9:1.

2. The high-low-temperature adhesive slurry according to claim 1, wherein the mass of the low-temperature adhesive material ≤ the mass of the high-temperature adhesive material.

3. The high-low-temperature adhesive slurry according to claim 2, wherein the mass ratio of the low-temperature adhesive material to the high-temperature adhesive material is 1:2-4.

4. The high-low-temperature adhesive slurry according to claim 3, wherein the low-temperature adhesive material is a polyacrylate polymer, and the high-temperature adhesive material is a fluorine-containing polymer.

5. The high-low-temperature adhesive slurry according to claim 1, wherein the preparation method of the adhesive material comprises the following steps: mixing the low-temperature adhesive material and the high-temperature adhesive material uniformly, melt-extruding, and granulating to obtain the adhesive material

6. The high-low-temperature adhesive slurry according to claim 5, wherein the adhesive material is ethylene-vinyl alcohol copolymer modified adhesive material.

7. The high-low-temperature adhesive slurry according to claim 6, wherein the raw materials of the ethylene-vinyl alcohol copolymer modified adhesive material include ethylene-vinyl alcohol copolymer and adhesive material at a mass ratio of 1-5:15.

8. The high-low-temperature adhesive slurry according to claim 7, wherein the preparation method of the ethylene-vinyl alcohol copolymer modified adhesive material comprises the following steps: dissolving the ethylene-vinyl alcohol copolymer in a solvent, adding the adhesive material and mixing uniformly, and drying to obtain the ethylene-vinyl alcohol copolymer modified adhesive material.

9. A preparation method of a lithium battery separator, wherein the method comprises the following steps: coating the high-low-temperature adhesive slurry according to any one of claims 1-8 onto a surface of a polyolefin base film, and drying to obtain a lithium battery separator.

10. A lithium battery, wherein raw materials comprise the lithium battery separator according to claim 9.
